## Europäisches Patentamt

## European Patent Office

## Office européen des brevets

(19)

(11) Veröffentlichungsnummer: **0 039 071**
A2

## EUROPÄISCHE PATENTANMELDUNG

(21) Anmeldenummer: **81103140.0**

(22) Anmeldetag: **27.04.81**

(51) Int. Cl.³: **B 62 D 23/00**
**B 62 D 29/04**

(30) Priorität: **28.04.80 DE 3016295**

(43) Veröffentlichungstag der Anmeldung:
**04.11.81 Patentblatt 81/44**

(84) Benannte Vertragsstaaten:
**AT BE CH DE FR GB IT LI SE**

(71) Anmelder: **Aktiengesellschaft Adolph Saurer**

**CH-9320 Arbon(CH)**

(72) Erfinder: **Güttinger, Urs**
**Mittlerer Rolliring 923**
**CH-4614 Hägendorf(CH)**

(74) Vertreter: **Füchsle, Klaus, Dipl.-Ing. et al,**
**Hoffmann . Eitle & Partner Patentanwälte**
**Arabellastrasse 4**
**D-8000 München 81(DE)**

(54) **Wagenkasten, insbesondere für Kraftfahrzeuge.**

(57) Ein Wagenkasten, insbesondere für Kraftfahrzeuge, umfaßt eine aus miteinander verbundenen Profilen (1) bestehende, selbsttragende Struktur, die sowohl eine Außenhaut (3) als auch eine Innenhaut (2) mit zu den Profilen der Struktur unterschiedlichen mechanischen Eigenschaften, insbesondere eine größere Elastizität, trägt, wobei die Außenhaut (3) und die Innenhaut (2) zur Ausbildung von zwischen den Profilen (1) der Struktur verlaufenden Karosserieflächenabschnitten unmittelbar miteinander verbunden sind und für zugeordnete Profile (1) der Struktur jeweils die Profile (1) vollständig umgebende Hohlräume (5) ausbilden.

Um bei einem derartigen Wagenkasten bei einfachem Aufbau und damit problemloser und billiger Herstellbarkeit eine dauerhafte und robuste Anordnung der doppelschaligen Kunststoffhaut auf der tragenden Struktur zu erzielen, sind Außenhaut (3) und Innenhaut (2) über die zwischen ihnen gebildeten Hohlräume (5) an den Profilen (1) der Struktur schwimmend gelagert.

./...

FIG.1

## Wagenkasten, insbesondere für Kraftfahrzeuge

Die Erfindung betrifft einen Wagenkasten, insbesondere für Kraftfahrzeuge, der eine aus miteinander verbundenen Profilen bestehende, selbsttragende Struktur umfaßt, die sowohl eine Außenhaut als auch eine Innenhaut mit zu den Profilen der Struktur unterschiedlichen mechanischen Eigenschaften, insbesondere einer größeren Elastizität, trägt.

Bei einem bekannten Wagenkasten, insbesondere für Kraftfahrzeuge, besteht die tragende Struktur aus kastenförmigen Längsträgern, einem Wagenboden und einem Gerüst aus Bügeln, das die Seitenwände und das Dach überspannt. Auf diesem Bügelgerüst ist eine mehrteilige Außenhaut aus Kunststoff befestigt. Die Befestigung dieser Außenhaut an den Bügeln erfolgt durch Befestigungsschellen, die die zugeordneten Bügel teilweise umfassen und mit ihren Enden durch Schrauben mit dem entsprechenden Außenhautteil verbunden sind. Im Bereich der Befestigungsschellen sind zwischen der Außenhaut und den Bügeln elastische Zwischenlagen in Form von Gummikissen zwischengeschaltet. Durch diese Konstruktion soll erreicht werden, daß leichte Stöße von der elastischen Außenhaut allein aufgenommen werden, indem sich diese aufgrund der elastischen Zwischenlagen unabhängig von dem Bügelgerüst in gewissen Grenzen elastisch verformen kann. Das Bügelgerüst wird dagegen nur bei Überbeanspruchung der Außenhaut zur Aufnahme der Stoßenergie mit herangezogen. Auf diese Weise soll das Bügelgerüst, das dem Wagenkasten eine besonders hohe Formsteifigkeit und Stoßfestigkeit verleiht, weitestgehend geschont werden (DE-PS 729 881).

- 2 -

Obwohl bei diesem bekannten Wagenkasten zwischen dem starren Bügelgerüst und der elastischen Außenhaut elastische Zwischenlagen vorgesehen sind, die einen gewissen Teil der Stoßenergie absorbieren, ist nach wie vor das Problem der Kraftübertragung und damit der zuverlässigen und dauerhaften Befestigung der Außenhaut aus einem relativ elastischen Kunststoff und dem sehr starren Bügelgerüst gegeben. Bei der bekannten Konstruktion tritt nämlich sehr leicht die Gefahr auf, daß bei größerer Beanspruchung der Außenhaut diese beschädigt wird, insbesondere im Bereich der von den Schrauben für die Befestigungsschellen durchsetzten Bohrungen mit der Folge eines Ausreißens dieser Bohrungen und eines Lösens dieser Schraubverbindungen. Darüber hinaus ist die bekannte Anordnung sowohl im Aufbau als auch in bezug auf die Montage kompliziert, nachdem die Befestigung der Außenhaut an dem Bügelgerüst mittels separater Befestigungsschellen erfolgt und darüber hinaus noch die elastischen Zwischenlagen an jeder Befestigungsstelle eingelegt werden müssen.

Es ist ferner ein Wagenkasten der vorausgesetzten Art bekannt, bei welchem an der selbsttragenden Struktur, die aus miteinander verbundenen Metallprofilen besteht, nicht nur eine Außenhaut aus Kunststoff, insbesondere GFK, sondern auch eine Innenhaut aus demselben Material befestigt ist. Die Verbindung sowohl der Außenhaut als auch der Innenhaut mit der Struktur erfolgt dadurch, daß die Struktur in ein Kunststoffbad getaucht wird, danach Bänder aus glasfaserverstärktem Kunststoff manschettenartig um die Profile der Struktur gelegt werden und die freien Enden der glasfaserverstärkten Kunststoffbänder mit der Haut ebenfalls durch Kunststoff unter Polymerisation des Kunststoffverbundes verklebt werden (FR-PS 1 202 866).

Bei dieser bekannten Konstruktion sind Außenhaut und Innenhaut unabhängig voneinander mit den zugeordneten Profilen der selbsttragenden Struktur des Wagenkastens verbunden. Dabei soll diese Verbindung als besonders starrer Kunststoffverbund ausgestaltet sein, da die Bänder aus glasfaserverstärktem Kunststoff sowohl mit den Profilen als auch mit der jeweiligen Haut verklebt werden. Die Verbindungsstellen unterliegen damit bei Schwingungen oder bei Stoßkräften, welche entweder auf die jeweilige Haut oder auf die selbsttragende Struktur ausgeübt werden, der Gefahr eines schnellen Bruches. Darüber hinaus ist der bekannte Wagenkasten nur relativ aufwendig herzustellen, weil zuerst die Struktur in ein Kunststoffbad getaucht, dann das jeweilige manschettenartige, aus glasfaserverstärktem Kunststoff bestehende Band um das Profil gelegt und dann das Band mit der zugeordneten Haut wieder durch Aufbringen von Kunststoff und anschließender Polymerisation des Kunststoffverbundes verklebt werden muß.

Demgegenüber ist es Aufgabe der Erfindung, einen Wagenkasten zu schaffen, der sich bei einfachem Aufbau und damit problemloser und billiger Herstellbarkeit durch eine dauerhafte und robuste Anordnung der doppelschaligen Kunststoffhaut auf der tragenden Struktur auszeichnet.

Diese Aufgabe wird bei einem Wagenkasten der erläuterten Art dadurch gelöst, daß die Außenhaut und die Innenhaut unmittelbar miteinander verbunden und derart geformt sind, daß sie unter Bildung von Hohlräumen die zugeordneten Profile der Struktur jeweils vollständig umgeben.

Die erfindungsgemäße Konstruktion stellt eine Art "schwimmende" Befestigung der aus Außenhaut und Innenhaut bestehenden Doppelschale an der selbsttragenden Struktur dar. Die Doppelschale aus Außenhaut und Innenhaut, welche miteinander verbunden sind, kann sich nämlich unter dem Einfluß von Schwingungen, Stoßkräften oder dergleichen relativ zur selbsttragenden Struktur bewegen und verwinden, indem die Doppelschale sich senkrecht zur Erstreckung der Profile bewegt oder parallel zu den Profilen sich verschiebt. Um diese Bewegungen bzw. aus den beiden Bewegungen resultierende Bewegungen zwischen der Doppelschale und der Struktur zuzulassen, werden die Toleranzen der Innendurchmesser der Hohlräume zwischen der Doppelschale und den zugeordneten Profilen der Struktur, die vollständig von diesen Hohlräumen umfaßt sind, entsprechend bemessen. Dieses gewisse Freimaß läßt auch eine einfache Herstellung sowohl der aus Außenhaut und Innenhaut bestehenden Doppelschale als auch der selbsttragenden Struktur des erfindungsgemäßen Wagenkastens zu. Trotzdem gewährleistet die Maßnahme, wonach Außenhaut und Innenhaut gemeinsam das jeweilige Profil der tragenden Struktur umfassen, eine genaue Positionierung und dauerhafte Fixierung der Doppelschale an der selbsttragenden Struktur.

Zweck der erfindungsgemäßen Anordnung ist es, die unter Last auftretenden Verformungen der tragenden Struktur nicht über die ansonsten vorhandenen Befestigungspunkte zwischen der Struktur und der Verblechung in letztere einzuleiten und in dieser örtliche Beschädigungen hervorzurufen.

Nachdem Außenhaut und Innenhaut unmittelbar miteinander verbunden sind, müssen an der zweckmäßigerweise korrosionsgeschützten Struktur keine Befestigungslöcher, Gewinde oder dergleichen angebracht werden, welche immer aufgrund des Abriebs und anderer Beanspruchungen Ausgangspunkt für Rost darstellen.

Außenhaut und Innenhaut des erfindungsgemäßen Wagenkastens bestehen zweckmäßigerweise aus glasfaserverstärkten Kunststoff-Plattenelementen, die sich leicht formen lassen, um die Hohlraumabschnitte auszubilden, die bei fertig montierter Doppelschale die Hohlräume ergeben, in denen jeweils die zugeordneten Profile der Wagenkasten-Struktur zu liegen kommen.

Die tragende Struktur des Wagenkastens umfaßt einen Fahrgestellrahmen, welcher fest mit der Seitenwand- und Dachkonstruktion verbunden ist. Alle Profile bzw. Stabelemente bestehen aus handelsüblichen Rechteck- und Rund-Hohlprofilen. Diese können verzinkt oder auf andere Weise korrosionsgeschützt sein. Dieser Korrosionsschutz wird bei der erfindungsgemäßen Lösung nicht durch Befestigungslöcher, Gewinde oder dergleichen zerstört.

Eine besonders einfache Montage des erfindungsgemäßen Wagenkastens ergibt sich dann, wenn Außenhaut und Innenhaut miteinander verklebt sind. Bei Herstellung der Häute aus glasfaserverstärktem Kunststoff bieten sich bekannte Kunststoffkleber an, die eine sehr große Haftkraft erzeugen.

Es kann aber auch vorteilhaft sein, Außenhaut und Innenhaut miteinander zu verschrauben. Falls es auf eine leichte Demontierbarkeit sämtlicher Karosserieteile ankommt, empfiehlt sich diese Verbindungsmöglichkeit.

Es kann von Vorteil sein, wenn die Außenhaut und die Innenhaut die zugeordneten Profile der Struktur weitgehend formschlüssig umfassen. In diesem Fall sind nur relativ kleine Relativbewegungen der Doppelschale senkrecht zu dem jeweiligen Profil der Struktur möglich, jedoch ist nach wie vor eine größere Bewegungsfreiheit parallel zu den Profilen der Struktur gegeben. Diese Anordnung wird sich dann empfehlen, wenn die Struktur des Wagenkastens relativ starr ausgebildet ist und damit sich nur in geringem Umfang verwindet bzw. verformt.

Bei einem anderen Ausführungsbeispiel der erfindungsgemäßen Lösung sind hingegen die Hohlräume zwischen der Außenhaut und der Innenhaut einerseits und den zugeordneten Profilen der Struktur ausgeschäumt. Das Ausschäumen wird sich empfehlen, um Geräusche bei einer Relativbewegung zwischen der Doppelschale und der Struktur weitgehend zu vermeiden.

Es ist ferner vorteilhaft, wenn zumindest die Außenhaut stoßabsorbierend, z.B. durch Ausbildung einer Doppelwand, ausgebildet ist. In diesem Fall wird bereits ein hoher Anteil an Stoßenergie durch die Außenhaut aufgenommen mit der Folge, daß eine Beschädigung der Innenhaut bzw. der Verbindungsstellen zwischen Außenhaut und Innenhaut weitgehend vermieden ist.

Nach einem weiteren zweckmäßigen Ausführungsbeispiel der Erfindung sind an der Außenhaut Abschlußprofile, insbesondere aus Kunststoff, z.B. Polyurethan, als Kantenschutz, Schraubenabdeckung, Verdeckhalterung bzw. Scheibeneinfassung angeordnet. Auf diese Weise nimmt die Außenhaut bzw. die Doppelschale eine Reihe von Karosseriebauteilen auf, wodurch Montage und Demontage vereinfacht werden.

Die Erfindung zeichnet sich insgesamt durch eine neuartige Verbindungsweise einer elastischen Doppelschale mit der selbsttragenden Struktur eines Wagenkastens aus. Die erfindungsgemäße Lösung ist einfach aufgebaut, billig herstellbar und trotzdem robust. Die auf den Wagenkasten ausgeübten Kräfte werden beinahe ausschließlich von der selbsttragenden Struktur der Zelle abgetragen.

Aus diesen Gründen eignet sich die erfindungsgemäße Anordnung insbesondere für Kraftfahrzeuge, die einem rauhen Betrieb unterliegen und auf die demgemäß entsprechend große und wechselnde Belastungen ausgeübt werden, wie auf Geländewagen oder dergleichen.

Ausführungsbeispiele der erfindungsgemäßen Ausgestaltung eines Wagenkastens werden anhand der Zeichnungen erläutert. Es zeigt:

Fig. 1 einen vertikalen Schnitt durch eine Seitenwand eines erfindungsgemäß ausgebildeten Wagenkastens,

Fig. 2 eine stoßabsorbierende Ausbildung der Außenhaut und

Fig. 3 eine Ausbildungsmöglichkeit der Verbindung zwischen Außenhaut und Innenhaut und der tragenden Struktur des Wagenkastens.

Wie sich aus den Figuren ergibt, ist die selbsttragende Struktur des Wagenkastens unter anderem durch Rechteckrohre 1 gebildet. Die tragende Struktur besteht aus Stahl, Leichtmetall oder dergleichen.

Mit 2 ist eine Innenhaut und mit 3 eine Außenhaut bezeichnet, die in noch näher zu schildender Weise eine Doppelschale bilden und mit der tragenden Struktur des Wagenkastens verbunden sind. Außenhaut und Innenhaut bestehen aus Kunststoff, zweckmäßigerweise glasfaserverstärktem Kunststoff.

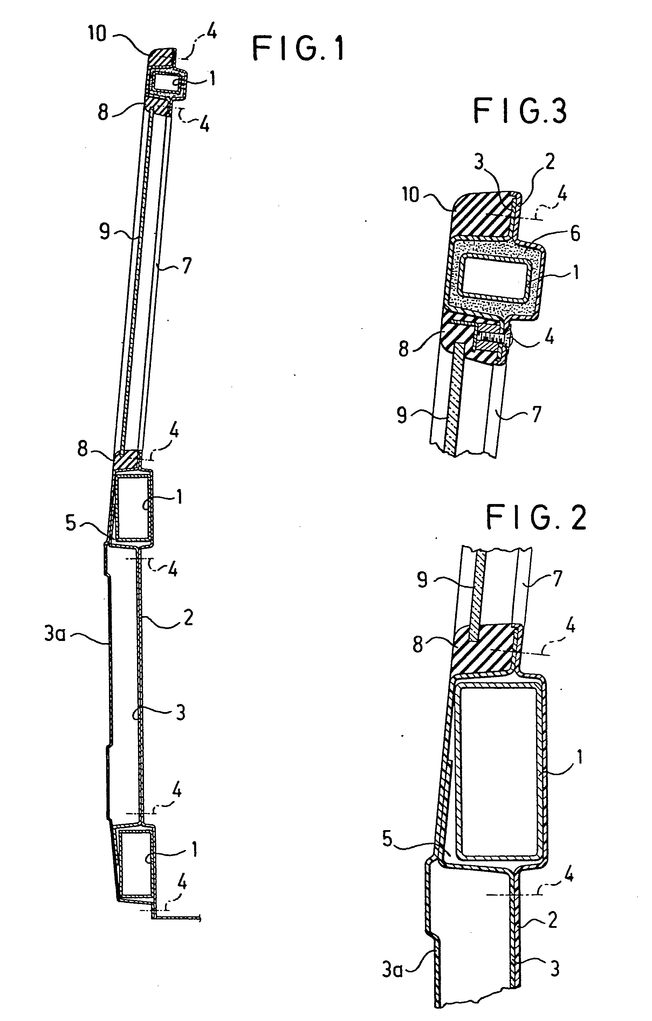

Wie in den Fig. 2 und 3 angedeutet, sind Innenhaut 2 und Außenhaut 3 unmittelbar miteinander verbunden, und zwar mittels Schrauben 4. Damit ist insbesondere eine einfache Demontage der Karosserie gewährleistet.

Außenhaut 3 und Innenhaut 2 sind derart geformt, daß sie im verbundenen Zustand Hohlräume bilden, in die jeweils die angeordneten Rechteckrohre 1 der selbsttragenden Struktur des Wagenkastens eingebettet sind. Dabei sind die Schraubverbindungen 4 in der Nähe der Hohlräume 5 angeordnet, um ein unzulässiges Ausbeulen der Haut 2 bzw. 3 im Bereich des jeweiligen Rechteckrohrs 1 zu vermeiden.

Während gemäß Fig. 2 Außenhaut 3 und Innenhaut 2 das Rechteckrohr 1 der Struktur weitgehend formschlüssig umfassen, ist bei der Ausführungsform nach Fig. 3 der Hohlraum 5 mit relativ großem Übermaß in

- 9 -

bezug auf das Rechteckrohr 1 ausgestaltet, so daß der Raum zwischen Außenhaut 3 und Innenhaut 2 einerseits und der Außenseite des Rechteckrohrs 1 andererseits durch einen geeigneten Kunststoff 6 ausgeschäumt werden kann.

Wie sich aus den Fig. 1 und 2 ergibt, ist die Außenhaut 3 stoßabsorbierend ausgebildet, indem an der Außenseite eine weitere Wandung 3a vorgesetzt ist, so daß somit die Außenhaut doppelwandig gestaltet ist.

Außenhaut 3 und Innenhaut 2 können in an sich bekannter Weise mit einem Fensterausschnitt 7 versehen sein. Auf der Außenseite des Randes dieses Fensterausschnittes 7 ist ein Abschlußprofil 8 z.B. mittels Schrauben befestigt, das eine Fensterscheibe 9 trägt.

An der Außenfläche der Außenhaut können ferner weitere Abschlußprofile, wie z.B. das Abschlußprofil 10, vorgesehen sein, die mit der Haut verschraubt oder verklebt sein können und als Kantenschutz wirken.

Die tragende Struktur des erfindungsgemäßen Wagenkastens und die übrige Ausbildung von Außenhaut und Innenhaut können natürlich beliebig sein.

Patentansprüche:

1. Wagenkasten, insbesondere für Kraftfahrzeuge, der eine aus miteinander verbundenen Profilen bestehende, selbsttragende Struktur umfaßt, die sowohl eine Außenhaut als auch eine Innenhaut mit zu den Profilen der Struktur unterschiedlichen mechanischen Eigenschaften, insbesondere einer größeren Elastizität, trägt, wobei die Außenhaut und die Innenhaut zur Ausbildung von zwischen den Profilen der Struktur ausgebildeten Karosserieflächenabschnitten unmittelbar miteinander verbunden sind und für zugeordnete Profile der Struktur jeweils die Profile vollständig umgebende Hohlräume ausbilden, d a d u r c h   g e k e n n z e i c h n e t , daß Außenhaut (3) und Innenhaut (2) über die zwischen ihnen gebildeten Hohlräume (5) an den Profilen (1) der Struktur schwimmend gelagert sind.

2. Wagenkasten nach Anspruch 1, dadurch g e k e n n z e i c h n e t , daß Außenhaut (3) und Innnenhaut (2) miteinander verklebt sind.

3. Wagenkasten nach Anspruch 1, dadurch g e k e n n z e i c h n e t , daß Außenhaut (3) und Innenhaut (2) miteinander verschraubt sind (insbesondere Fig. 3).

4. Wagenkasten nach einem der vorherigen Ansprüche, dadurch   g e k e n n z e i c h n e t , daß die Außenhaut (3) und die Innenhaut (2) die zugeordneten Profile (1) der Struktur weitgehend formschlüssig umfassen (Fig. 2).

5. Wagenkasten nach einem der vorherigen Ansprüche, dadurch g e k e n n z e i c h n e t , daß die Hohlräume zwischen der Außenhaut (3) und der Innenhaut (2) einerseits und den zugeordneten Profilen (1) der Struktur ausgeschäumt sind (Fig. 3).

6. Wagenkasten nach einem der vorherigen Ansprüche, dadurch g e k e n n z e i c h n e t , daß zumindest die Außenhaut (3) stoßabsorbierend, z.B. durch Ausbildung einer Doppelwand (3, 3a) ausgebildet ist.

7. Wagenkasten nach einem der vorherigen Ansprüche, dadurch g e k e n n z e i c h n e t , daß an der Außenhaut (3) Abschlußprofile (8; 10), insbesondere aus Kunststoff, als Kantenschutz, Schraubenabdeckung, Verdeckhalterung bzw. Scheibeneinfassung angeordnet sind.

FIG.1

FIG.3

FIG.2